Europäisches Patentamt

**European Patent Office**

**Office européen des brevets**

(11) Numéro de publication : **0 027 411 B1**

(12) **FASCICULE DE BREVET EUROPÉEN**

(45) Date de publication du fascicule du brevet :
20.02.85

(21) Numéro de dépôt : **80401430.6**

(22) Date de dépôt : **07.10.80**

(51) Int. Cl.⁴ : **G 01 L   3/24**

(54) Procédé pour mesurer la puissance d'un moteur de véhicule automobile sur un banc à rouleaux, et banc de mesure pour la mise en œuvre de ce procédé.

(30) Priorité : 16.10.79 FR 7925662
06.08.80 FR 8017347

(43) Date de publication de la demande :
22.04.81 Bulletin 81/16

(45) Mention de la délivrance du brevet :
20.02.85 Bulletin 85/08

(84) Etats contractants désignés :
AT BE CH DE GB IT LI LU NL SE

(56) Documents cités :
DE-A- 2 339 580
FR-A- 2 014 961
FR-A- 2 323 996
FR-A- 2 397 628

(73) Titulaire : **Etablissements M. Muller & Cie**
**50-56, rue des Tournelles**
**F-75140 Paris Cedex 03 (FR)**

(72) Inventeur : **Coetsier, Paul**
**4, Impasse Jean Macé**
**F-77500 Chelles (FR)**
Inventeur : **Ravarotto, Robert**
**30, Route de Champigny**
**F-94350 Villiers Sur Marne (FR)**

(74) Mandataire : **Tony-Durand, Serge**
**Cabinet Tony-Durand 22, Boulevard Voltaire**
**F-75011 Paris (FR)**

Jouve, 18, rue St-Denis, 75001 Paris, France

# 0 027 411

## Description

La présente invention a pour objet un procédé pour mesurer la puissance d'un moteur de véhicule automobile sur un banc à rouleaux, ainsi qu'un banc de mesure destiné à la mise en œuvre de ce procédé.

On connaît un procédé de mesure de la puissance d'un moteur de véhicule sur un banc à rouleaux, selon lequel les roues motrices du véhicule étant placées en appui sur deux paires de rouleaux, on choisit une vitesse ou un nombre de tours/minute du moteur à laquelle on veut exécuter la mesure, on porte, au cours d'une première phase d'accélération, la vitesse du moteur jusqu'à la vitesse choisie, on mesure à celle-ci la puissance fournie aux roues, on accélère légèrement le moteur au-dessus de cette vitesse, puis on débraye et on le place au point mort, et on laisse les rouleaux ralentir leur vitesse de rotation jusqu'à l'arrêt en entraînant par leur inertie la transmission du moteur. Lors de cette seconde phase de décélération, on mesure la puissance perdue dans la transmission.

Un tel procédé, dans lequel la puissance et la vitesse de rotation du rouleau sont déterminées par un traitement analogique, au fur et à mesure de la variation de la vitesse, est connu par le FR-A-2 323 996 et le DE-A-2 332 560. Le graphique obtenu à la fin d'un cycle de mesure représente en ordonnées, la puissance du moteur, et en abscisses la vitesse. Pendant la phase d'accélération, la puissance inscrite sur le graphique est la puissance effectivement transmise aux roues par le moteur, et cette courbe présente des variations brusques correspondant aux changements de vitesse. Lorsque le moteur est débrayé, la puissance enregistrée tombe brusquement à une valeur négative, puis se rapproche de zéro au fur et à mesure que la vitesse de rotation des rouleaux se ralentit, ceux-ci entraînant la transmission par leur inertie.

La puissance pour une vitesse donnée inscrite en ordonnées négatives est la puissance due aux pertes dans la transmission, la puissance totale fournie par le moteur étant donc égale, en valeur absolue, à la puissance aux roues additionnée de la puissance correspondante perdue dans la transmission.

Selon le procédé de mesure décrit dans les documents précités, on calcule pour chaque valeur de la vitesse, la fréquence au moyen d'un capteur de vitesse de rotation disposé sur un rouleau de mesure du banc, ce capteur fournissant un signal de sortie proportionnel à la vitesse de rotation du rouleau. Ces signaux sont ensuite traités dans un dispositif analogique qui effectue un produit entre le signal fonction de la vitesse de rotation et un autre signal fonction du couple, ce qui permet d'obtenir la puissance.

De plus, ce calcul est fait en tenant compte d'une valeur correctrice introduite par l'opérateur dans le dispositif, et inclut divers facteurs correcteurs intéressant le type de véhicule placé sur le banc, la pression atmosphérique résultant de l'altitude du lieu de la mesure, et la température ambiante. Ces divers facteurs correcteurs peuvent être introduits dans le circuit par un diviseur de tension réglable.

Ainsi, avant chaque mesure de la puissance ou avant chaque série de mesures envisagées, l'opérateur introduit manuellement dans le dispositif des valeurs correctrices tenant compte de plusieurs paramètres dont certains se rapportent aux caractéristiques du véhicule, afin d'obtenir une valeur de la puissance corrigée en conséquence.

La précision obtenue sur la mesure de la fréquence est variable en fonction de la valeur de la fréquence elle-même, qui peut varier dans un rapport de 1 à 10 si l'on fait tourner les rouleaux de 20 kilomètres/heure jusqu'à 200 kilomètres/heure par exemple. Cette imprécision relative sur la mesure de la fréquence entraîne une imprécision corrélative sur la mesure de la puissance. De plus, le traitement analogique des signaux conduit à l'obtention d'une courbe de puissance dont la précision dépend de la largeur des intervalles d'intégration du traitement.

Par ailleurs dans un dispositif de mesure de conception différente, décrit dans le FR-A-2 397 628, il a été proposé de mesurer la vitesse de rotation de l'arbre d'un moteur en mesurant la période de signaux électriques au moyen d'un générateur d'impulsions. Cependant ce dispositif est de nature tout à fait différente de celui pour lequel est conçu le procédé selon l'invention, à savoir un banc d'essai à rouleaux.

En effet le dispositif décrit dans le FR-A-2 397 628 est conçu pour effectuer une mesure de puissance lorsque le moteur à contrôler est déposé. A cet effet ce dispositif comporte différents appareils destinés à être accouplés ou associés avec l'arbre du moteur. Ce dispositif n'a donc aucun rapport avec un banc à rouleaux.

Par ailleurs ce dispositif est conçu pour effectuer une mesure de la puissance à un régime stable et non pas de façon dynamique. En effet il est prévu une régulation du régime présélectionné.

Il existe donc des différences fondamentales par rapport au type de procédé et de dispositif de mesure auxquels s'apparentent le procédé et le dispositif selon l'invention.

Pour sa part celle-ci a pour but de permettre la mesure de la puissance du moteur d'un véhicule sur un banc d'essai à rouleaux, avec une précision accrue de la détermination de cette puissance par rapport à la précision obtenue avec les procédés connus auxquels il a été fait référence en premier lieu.

Le procédé selon l'invention est du type dans lequel on mesure dynamiquement la puissance totale d'un moteur de véhicule automobile sur un banc d'essai à rouleaux apte à recevoir les roues motrices d'un véhicule, en faisant l'addition, en valeur absolue, de la puissance $P_1$ fournie aux roues et de la puissance $P_2$ perdue dans la transmission, et selon lequel on choisit une vitesse linéaire V d'un des rouleaux ou un nombre de tours/minute du moteur jusqu'à laquelle ou jusqu'auquel on veut exécuter la mesure, on porte au cours d'une première phase d'accélération à moteur embrayé, la vitesse linéaire V ou le nombre de tours/minute de la valeur nulle jusqu'à la vitesse choisie, on mesure périodiquement, jusqu'à cette vitesse V ou ce nombre de tours, la puissance P1 fournie aux roues, on accélère légèrement le moteur au-dessus de cette vitesse ou de ce nombre de tours puis on débraye le moteur et on le place au point mort, on laisse les rouleaux ralentir leur vitesse de rotation jusqu'à l'arrêt en entraînant par leur inertie la transmission du moteur, et on mesure périodiquement, lors de cette seconde phase de décélération, la puissance P2 perdue dans la transmission, ladite mesure de la puissance respectivement P1 ou P2 étant effectuée à des instants choisis périodiquement en utilisant un capteur de vitesse, c'est-à-dire un générateur calé sur ledit rouleau et délivrant des signaux électriques dont la période T est inversement proportionnelle à la vitesse de rotation dudit rouleau.

Cependant le procédé selon l'invention est caractérisé en ce que l'on réalise ladite mesure de la puissance P1, ou respectivement P2, en mesurant à chacun desdits instants deux périodes successives T1 et T2 des signaux électriques émis par ce générateur et ce, au moyen d'une horloge interne pilotée par un quartz à haute fréquence, puis on calcule ladite puissance P1 ou respectivement P2 à partir de la différence des deux périodes successives mesurées T1 et T2 et du moment d'inertie J des rouleaux, selon la formule :

$$P1 \text{ ou } P2 = \frac{K_1 \cdot J \cdot (T1 - T2)}{T*4}$$

dans laquelle P1, P2 est en KW, J en kg $\cdot$ m$^2$, T*. T1 et T2 en $10^{-7}$ s et $K_1 = 4 \cdot 10^{18} \cdot \pi^2$, la valeur de la période T* étant voisine de celle de T1 ou T2,
et on calcule également la vitesse linéaire V dudit rouleau (1, 2) à partir de la période T* et du rayon R dudit rouleau, selon la formule :

$$V = \frac{K_2 \cdot R}{T*}$$

avec V en Km/h, R en m et $K_2 = 72 \cdot 10^6 \cdot \pi$.

Suivant une forme particulière de mise en œuvre du présent procédé, on inscrit sur une imprimante, pour chaque vitesse linéaire V dudit rouleau ou nombre de tours/minute prédéterminé du moteur, la puissance P1 du moteur aux roues à cette vitesse, la puissance P2 perdue dans la transmission à cette vitesse, la puissance totale du moteur, le pourcentage de puissance perdue et le nombre de tours/minute du moteur. L'utilisateur dispose ainsi automatiquement, à la fin de chaque mesure, des renseignements voulus imprimés.

L'invention a également pour objet un banc de mesure conçu pour la mise en œuvre du présent procédé. Ce banc de mesure comprend des rouleaux aptes à recevoir les roues motrices d'un véhicule, un capteur de la vitesse de rotation d'un de ces rouleaux et un dispositif de mesure apte à déterminer la valeur de la puissance totale à partir des signaux électriques émis par le capteur de vitesse et comportant des moyens pour additionner, en valeur absolue, la puissance P1 fournie aux roues et la puissance P2 perdue dans la transmission.

Or le banc de mesure selon l'invention est caractérisé en ce que ce générateur émet un desdits signaux de période T à chaque tour complet dudit rouleau, et en ce que le dispositif de mesure comprend :
— un système de mesure, opérant à des instants choisis périodiquement, de deux périodes consécutives T1 et T2 des signaux électriques émis par ce capteur de vitesse au moyen d'une horloge interne pilotée par un quartz à haute fréquence et d'une interface de traitement logique ;
— un système de détermination à chacun desdits instants en cas de moteur embrayé en phase d'accélération et en cas de moteur débrayé en phase de décélération respectivement de la puissance P1 aux roues, et de la puissance P2 perdue dans la transmission par application de la formule :

$$P1 \text{ ou } P2 = \frac{K_1 \cdot J \cdot (T1 - T2)}{T*4}$$

dans laquelle P est en KW, J en kg $\cdot$ m$^2$, T*, T1 et T2 en $10^{-7}$ s et $K_1 = 4 \cdot 10^{18} \cdot \pi^2$, la valeur de la période T* étant voisine de celle de T1 ou T2, et un système de détermination de la vitesse linéaire dudit rouleau par application de la formule :

$$V = \frac{K_2 \cdot R}{T*}$$

avec V en Km/h, R en m étant le rayon du rouleau, et $K_2 = 72 \cdot 10^6 \cdot \pi$,
le système de détermination comportant un microprocesseur interposé entre le capteur de vitesse et des moyens de conversion et d'enregistrement de la puissance P1 aux roues et de la vitesse linéaire V dudit rouleau pendant la phase d'accélération, et de la puissance P2 perdue dans la transmission en fonction de ladite vitesse V pendant la phase de décélération, les puissances P1 et P2 de la vitesse V étant enregistrées respectivement en ordonnées et en abscisses sur une table traçante, l'interface de traitement logique étant interposé entre le capteur de vitesse et le microprocesseur.

Suivant une forme particulière de réalisation de l'invention, on exécute le calcul de la puissance en effectuant plusieurs calculs primaires pour établir une valeur moyenne, le nombre de ces calculs primaires ou « taux d'intégration » étant soit fixe, soit variable, en fonction de la forme de la courbe de puissance. Cette intégration des valeurs obtenues pour la puissance, effectuées par le calculateur sur plusieurs périodes, permet l'obtention d'une courbe plus régulière, éliminant un certain nombre d'irrégularités relevées sur la courbe entre deux changements de vitesse consécutifs, dues aux vibrations causées par un mauvais équilibrage des roues du véhicule ou par d'autres perturbations dynamiques, ces irrégularités provoquant des erreurs.

D'autres particularités et avantages de l'invention apparaîtront au cours de la description détaillée qui va suivre.

Aux dessins annexés, donnés à titre d'exemples non limitatifs, on a représenté trois exemples de réalisation de l'invention.

— La figure 1 est un schéma synoptique d'une forme d'exécution de l'appareillage électronique du banc de mesure selon l'invention.

— La figure 2 est un premier exemple d'un diagramme de la puissance en fonction de la vitesse, obtenu au moyen du banc selon l'invention.

— La figure 3 montre un exemple numérique des informations pouvant être transcrites sur l'imprimante du banc.

— La figure 4 est un diagramme de la puissance en fonction de la vitesse du genre de celui de la figure 2.

— La figure 5 est un diagramme montrant la même courbe que celle de la figure 4, mais dans lequel le calcul de la puissance a été intégré suivant un taux variable en fonction de la pente de la courbe, conformément à une seconde forme d'exécution du procédé de l'invention.

— La figure 6 est un diagramme représentant la puissance en fonction de la vitesse pour un véhicule à boîte de vitesses automatique, avec pré-sélection de la vitesse de passage de la deuxième en troisième et un taux d'intégration minimum.

— La figure 7 est une vue analogue à la figure 6, mais dans laquelle l'intégration du calcul de la puissance avec un taux variable est déclenchée avant la vitesse pré-sélectionnée pour le changement de seconde en troisième, suivant une troisième forme de réalisation du procédé.

Le procédé de mesure de la puissance d'un véhicule automobile sur un banc à rouleaux visé par l'invention, est basé sur l'application de la formule suivante :

$$P = J\omega \cdot \frac{d\omega}{dt}$$

avec

P : puissance en kW

J : moment d'inertie des rouleaux en kg·m$^2$

$\omega$ : vitesse angulaire des rouleaux en rd/s.

Pour un $\Delta t$ suffisamment petit, la formule devient :

$$P = J\omega \cdot \frac{\Delta\omega}{\Delta t}$$

Dans la formule ci-dessus $\Delta t$ est le temps mis par un rouleau pour effectuer un tour complet. Si la puissance P devait être calculée directement à partir de cette formule, cela nécessiterait la mesure de la vitesse angulaire $\omega$, donc de la fréquence.

Donc

$$P = J\omega \cdot \frac{\omega_2 - \omega_1}{\Delta t}$$

$\omega_1$ et $\omega_2$ étant deux valeurs de $\omega$ mesurées successivement après un intervalle de temps $\Delta t$.

Du fait que :

$$\omega = \frac{2\pi}{T}$$

Il vient :

$$P = \frac{2\pi J}{T} \cdot \frac{\frac{2}{T_2} - \frac{2\pi}{T_1}}{\Delta t}$$

Du fait que $\Delta t$ est égal à T, on peut écrire :

$$P = \frac{4\pi^2 J(T1 - T2)}{T2 \cdot T1 \cdot T2}$$

La mesure étant faite sur deux signaux consécutifs, les valeurs de T sont très voisines et on peut écrire :

$$P = \frac{K1 \cdot J \cdot (T1 - T2)}{T4}$$

Avec

P en kW.

J en $kg \cdot m^2$ et

$K_1 = 4 \cdot 10^{18} \times \pi^2$

$T_1$ et $T_2$ en $10^{-7}$ s.

On calcule également la vitesse à partir de T :

$$V = \frac{K_2 \cdot R}{T}$$

avec

V en km/h

R en m (rayon du rouleau)

T en $10^{-7}$ s et

$K_2 = 72 \cdot 10^6 \cdot \pi$.

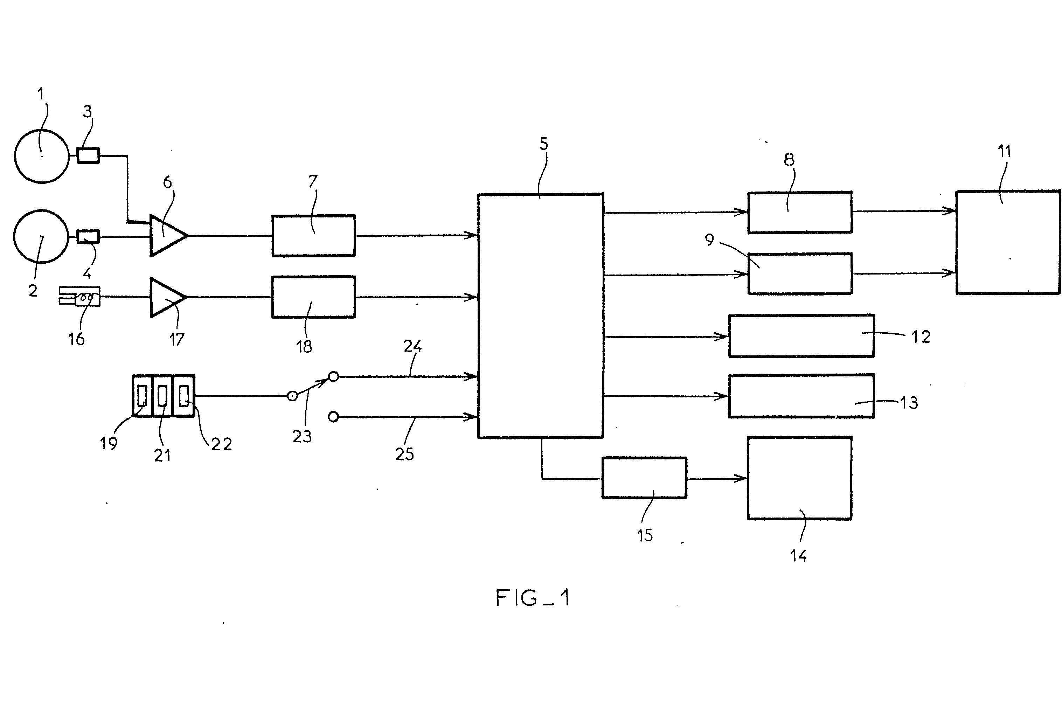

On décrira maintenant en se référant à la figure 1 annexée une forme de réalisation du banc de mesure prévu par l'invention pour pouvoir déterminer la puissance du moteur conformément aux calculs exposés ci-dessus.

Le banc comprend deux paires de rouleaux destinés à recevoir les roues motrices du véhicule à tester, l'un des rouleaux de chaque paire (1, 2) étant muni d'un capteur de vitesse 3, 4 respectivement. Ces capteurs sont des générateurs de signaux électriques, capables d'émettre de façon connue en soi, un signal à chaque tour complet du rouleau de mesure correspondant 1, 2.

L'appareillage constitutif du banc comprend d'autre part un microprocesseur ou micro-calculateur 5, relié d'une part aux deux capteurs de vitesse 3, 4 par l'intermédiaire d'un organe de mise en forme 6, et d'un interface d'entrée 7, et d'autre part à des organes de conversion 8, 9 et d'enregistrement de la puissance fournie aux roues, de la puissance absorbée dans la transmission, et de la vitesse.

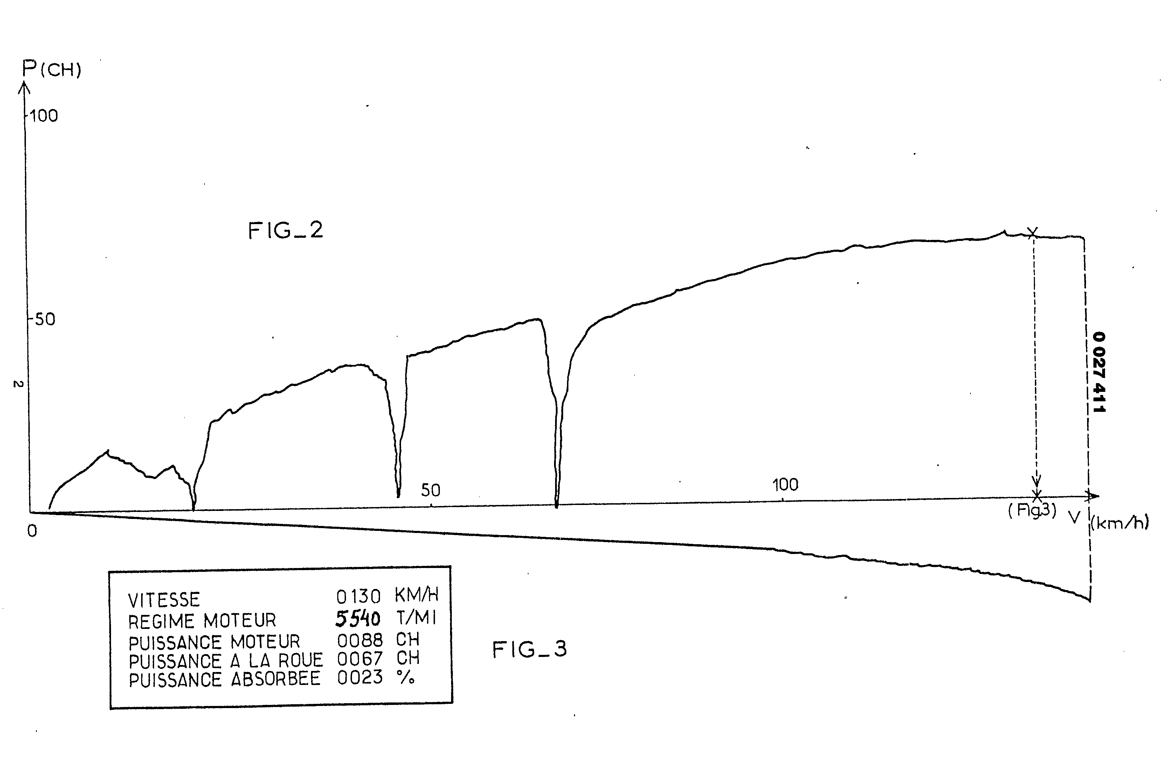

Les organes convertisseurs 8 et 9 assurent ainsi respectivement la conversion des valeurs de la vitesse en km/heure fournies par le microprocesseur 5, et de la puissance, par exemple, en CH, également calculée par le microprocesseur. Une table traçante 11 reliée aux convertisseurs 8 et 9 permet l'enregistrement de l'évolution de la puissance P sur l'axe des ordonnées, la vitesse V étant inscrite sur l'axe des abscisses (voir figure 3).

Un écran 12 relié au microprocesseur 5 a pour fonction d'afficher pour la vitesse ou le nombre de tours présélectionnée pour la mesure de la puissance, la puissance à la roue, par exemple en kW, et la puissance à la roue exprimée en CH. Cet écran 12 permet également d'afficher en continu la vitesse en km/heure du véhicule. Un second organe 13 est prévu pour l'affichage, à la vitesse (ou nombre de tours/minute) présélectionnée de mesure, de la puissance totale du moteur en kW et en CH. Il permet également d'afficher en continu le nombre de tours/minute du moteur du véhicule.

Suivant une particularité importante, l'invention prévoit en outre d'équiper l'appareillage électronique schématisé à la figure 1 d'une imprimante 14, reliée au microprocesseur 5 par un interface 15, et apte à afficher, à titre d'exemple, les indications suivantes :

Vitesse : en km/heure

Régime moteur : en tours/minute

Puissance moteur : en CH

Puissance à la roue : en CH

Puissance absorbée : en %.

Ces informations restent donc à la disposition de l'opérateur une fois le cycle de mesure terminé pour la vitesse présélectionnée.

L'installation électronique équipant le banc selon l'invention comprend par ailleurs une pince inductive 16 branchée de façon connue sur un fil de bougie du moteur du véhicule. Cette pince est reliée à un organe de mise en forme 17 lui-même relié à un interface d'entrée 18 connectée au microprocesseur 5.

Le banc comporte également des roues codeuses au nombre de trois (19, 21, 22) numérotées chacune de zéro à neuf, permettant de présélectionner manuellement, soit la vitesse en km/heure, soit le nombre de tours par minute du moteur, à laquelle doit être effectuée la mesure. Un interrupteur 23 permet de présélectionner soit la vitesse, soit le régime du moteur, respectivement par des connexions 24, 25 assurant la liaison entre l'interrupteur 23 et le microprocesseur 5.

La mise en œuvre du procédé de mesure conforme à l'invention au moyen du banc schématiquement représenté à la figure 1 est la suivante.

On affiche tout d'abord la vitesse en km/heure, à laquelle on désire faire la mesure, ou bien le nombre de tours/minute du moteur, au moyen des roues codeuses 19-21-22 de présélection. L'information correspondante (vitesse en km/heure ou nombre de tours par minute du moteur) est alors envoyée dans la mémoire du micro-calculateur 5.

On met en route le moteur du véhicule, qu'on accélère progressivement jusqu'à la vitesse sélectionnée et affichée, par exemple 150 km/heure. A partir d'un seuil de vitesse correspondant à un

**0 027 411**

nombre de tours déterminé des rouleaux de mesure 1, 2 par exemple dix km/heure, les capteurs de vitesse 3, 4 envoient à l'interface d'entrée 7, par l'intermédiaire de l'organe de mise en forme 6, des signaux électriques à chaque révolution complète effectuée par les rouleaux, l'organe de mise en forme 6 assurant la moyenne des signaux fournis par les capteurs 3 et 4. Par ailleurs, une horloge interne non représentée, pilotée par un quartz par exemple de 10 Mhz, émet constamment des impulsions à cette fréquence. Comme on l'a indiqué précédemment, la période, c'est-à-dire l'intervalle de temps séparant deux signaux consécutifs émis par les capteurs de vitesse 3, 4, est calculée par l'interface 7 réalisé en logique câblée.

La mesure s'effectue sur trois signaux consécutifs délimitant deux intervalles, dont la différence de durée est proportionnelle à la valeur de $\Delta\omega$.

L'entrée dans l'interface 7 d'un signal généré par le capteur de vitesse, ou plutôt du signal formant la moyenne des signaux provenant des capteurs 3 et 4, provoque successivement, dans l'interface 7, la mémorisation du nombre d'impulsions émises par l'horloge interne entre ce signal et le signal précédent, la remise à zéro d'un compteur qui totalise les impulsions provenant de l'horloge interne, et l'émission d'un signal de fin de mesure vers le micro-processeur 5.

A titre d'exemple indicatif, un tel calcul de la période peut être effectué par l'interface 7 toutes les 0,5 seconde environ.

Le second interface 18, contrôle le régime moteur.

A la réception du signal de fin de mesure, le calculateur 5 dispose, comme base de calcul, d'une valeur de la période 7 précise à $10^{-7}$ s $\pm$ 1 bit. Cette valeur est entrée dans la mémoire du calculateur sur 6 digits de 4 bits, ce qui autorise la mesure d'une période maximale de $(2^{24} - 1) \cdot 10^{-7}$ s, soit $16.777.215.10^{-7}$ s, c'est-à-dire 1,67 secondes. Dans le cas où le rouleau de mesure 1, 2 a une circonférence de 1 mètre, la période maximale ci-dessus de 1,67 secondes correspond à une vitesse de 2,15 km/heure, ce qui est tout-à-fait suffisant pour commencer la mesure.

La période T diminue progressivement au fur et à mesure que la vitesse des rouleaux augmente, et le micro-calculateur 5 exécute le calcul de la puissance et de la vitesse à partir des valeurs successives de la période qui lui sont fournies par l'interface 7. Chaque mesure s'effectue de préférence sur trois signaux successifs des capteurs 3, 4, comme indiqué précédemment. A chaque valeur de la puissance ainsi calculée à des intervalles qui dépendent de la vitesse de calcul du micro-calculateur 5, correspond donc un point ayant une ordonnée et une abscisse déterminées, qui vient s'inscrire sur la table traçante 11, après conversation par les organes 8, 9 des données fournies par le micro-calculateur.

Il convient de noter que le micro-calculateur 5 est programmé de façon à faire l'acquisition du seuil de mesure avant l'exécution d'un calcul de puissance. Après chaque acquisition de ce seuil, qui correspond par exemple à une vitesse minimale de 10 km/heure au-dessous de laquelle la puissance n'est pas calculée, le calculateur 5 attend le signal de fin de mesure délivré par l'interface 7 de mesure de la période. Dès réception de ce signal de fin de mesure, le micro-calculateur 5 fait l'acquisition de la période fournie par l'interface, et la compare à une valeur prédéterminée correspondant au seuil de vitesse précité. Si la période est supérieure à cette valeur, le programme se reboucle et refait l'acquisition du seuil. Sinon le processus de calcul de la puissance et de la vitesse est lancé dans l'unité de traitement du micro-calculateur.

A chaque déroulement de programme, par exemple toutes les 0,5 secondes environ, le calculateur 5 détermine la vitesse du véhicule, la puissance développée sur le rouleau de mesure, et le régime du moteur, grâce aux informations fournies par l'interface 18 relié à la pince inductive 16. Le calculateur commande la table traçante 11, en inscrivant sur celle-ci, comme indiqué précédemment, les valeurs de la vitesse en abscisses et de la puissance en ordonnées. Dès que la vitesse est égale à la vitesse présélectionnée à laquelle on veut effectuer la mesure, par exemple 150 km/heure, la valeur de la puissance correspondante est mémorisée (puissance fournie à la roue).

Le procédé se poursuit alors de la manière suivante. On maintient l'accélération jusqu'à ce que le moteur tourne à une vitesse légèrement supérieure à la vitesse affichée, de quelques pour cent, par exemple 155 km/heure si la vitesse choisie était de 150 km/heure. A ce moment, une lumière rouge s'allume sur le tableau de contrôle, puis l'opérateur relâche l'accélérateur et passe le point mort. Le véhicule ralentit, et lorsque la vitesse est à nouveau égale à la valeur sélectionnée pour la mesure, la valeur de la puissance est à nouveau mémorisée. Cette valeur est alors négative, car elle correspond à la phase de décélération, au cours de laquelle la table traçante 11 enregistre la puissance perdue dans la transmission.

On laisse les rouleaux 1, 2 ralentir progressivement en entraînant la transmission du moteur, la table traçante enregistrant la puissance absorbée correspondante en valeurs négatives.

En faisant la somme en valeur absolue de la puissance à la roue et de la puissance absorbée, on obtient la puissance totale développée par le moteur pour la vitesse prédéterminée de mesure au début du cycle.

Lorsque la vitesse des rouleaux redevient inférieur à la valeur minimale de seuil, par exemple 10 km/heure, les résultats sont affichés soit en CH, soit en kW sur les organes d'affichage 12 et 13, grâce à un commutateur approprié. D'autre part, l'imprimante 14 fournit les informations de puissance du moteur à la vitesse choisie pour la mesure. Un exemple indicatif des informations recueillis sur l'imprimante 14 est illustré à la figure 3, sur laquelle on voit que la mesure a été effectuée à une vitessre de 130 km/heure,

6

pour un régime moteur de 5 540 tours/minute, auquel correspond une puissance totale de 88 CH, une puissance à la roue de 67 CH, et une puissance absorbée de 23 %.

On a représenté à la figure 2 un exemple de courbe de puissance en fonction de la vitesse enregistrée par la table traçante 11, cette courbe correspondant à l'exemple numérique de la figure 3.

On vérifie en effet aisément que pour une vitesse V de 130 km/heure, la puissance P à la roue est de 67 CH.

Etant donné que la puissance du moteur est déterminée par un circuit de traitement logique, la précision des valeurs obtenues sera d'autant plus grande que la vitesse de calcul du microprocesseur 5 sera plus élevée, puisque les points de la courbe de puissance seront corrélativement plus rapprochés les uns des autres. On peut donc, afin d'accroître la précision de la mesure, utiliser un calculateur capable d'exécuter les calculs tous les dixièmes de seconde, ou tous les centièmes de seconde. Il est aussi possible, en utilisant un calculateur effectuant les mesures toutes les 0,5 secondes environ, de lui adjoindre un module de calcul rapide, capable de multiplier par dix la vitesse de calcul. A titre purement indicatif, on peut utiliser un micro-calculateur tel que ceux connus sous les références AM 9511 et 8085 INTEL.

Ainsi, la précision finale obtenue est fonction d'une part de la précision de la mesure de la période, et d'autre part de la puissance du micro-calculateur utilisé. On notera que la précision sur la mesure de la période est totalement indépendante de l'amplitude de celle-ci, puisque cette précision correspond à l'intervalle de temps s'écoulant entre deux impulsions de l'horloge interne, c'est-à-dire $10^{-7}$ seconde dans l'exemple décrit, et ce quelle que soit l'amplitude de la période mesurée. A titre indicatif, le nombre d'impulsions émises par l'horloge dans une période correspondant à une vitesse de 100 km/heure environ, pour une puissance de 120 kW, est de l'ordre de 5 000.

Suivant une seconde forme d'exécution du procédé visé par l'invention, on exécute le calcul de la puissance en effectuant plusieurs calculs primaires de puissance pour établir une valeur moyenne, le nombre de ces calculs primaires ou « taux d'intégration » étant soit fixe, soit variable en fonction de la forme de la courbe de puissance.

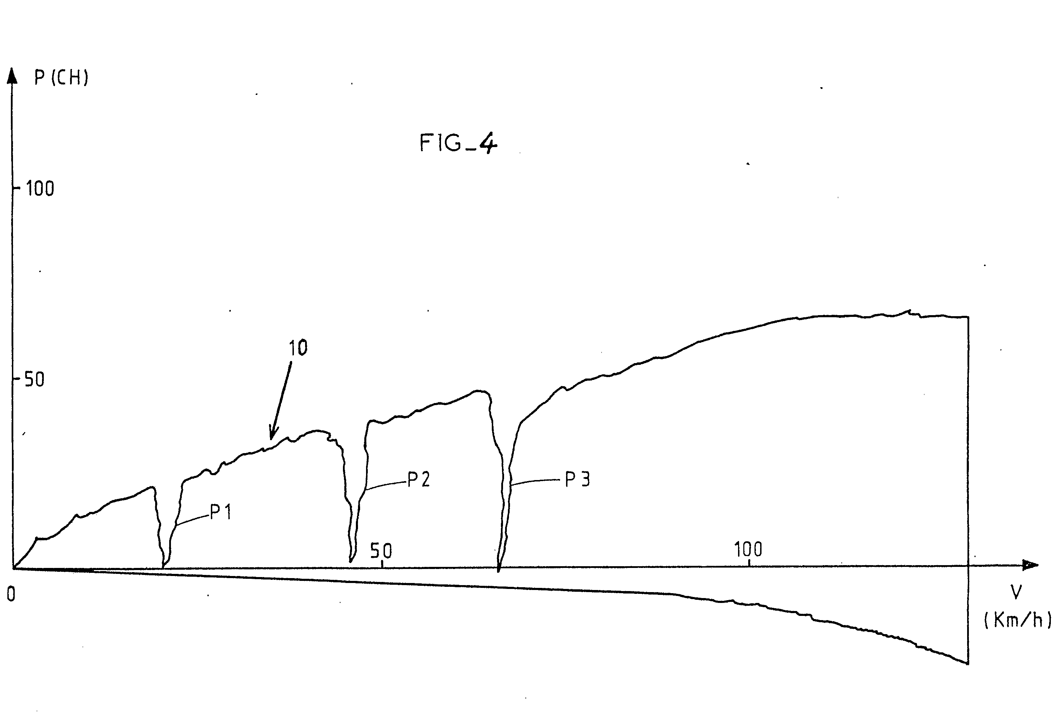

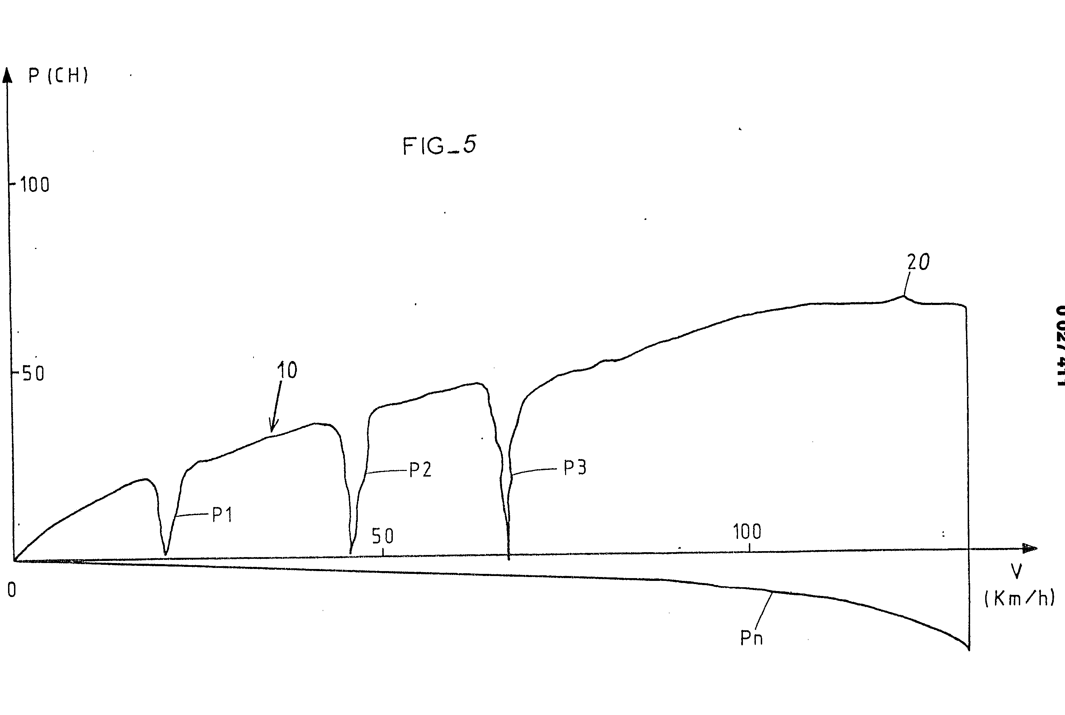

En effet, lorsque la courbe de puissance P (en chevaux en fonction de la vitesse (en kilomètres heure) représentée à la figure 4 atteint un maximum, entre deux changements de vitesse consécutifs, on observe, par exemple dans la partie référencée 10, des irrégularités formant des sortes de « vaguelettes » qui correspondent à des défauts dus aux vibrations. L'intégration des valeurs obtenues de la puissance sur plusieurs périodes permet de supprimer ces défauts de la courbe enregistrée, comme on le constate sur la courbe P (V) illustrée à la figure 5.

Sur celle-ci on voit en effet que les maxima des différentes portions de la courbe comprises chacune entre deux changements successifs de vitesse, eux-mêmes matérialisés par les pics négatifs, p1, p2, p3, ne représentent plus les irrégularités visibles à la figure 4 et sont donc à peu près réguliers.

Dans la forme de réalisation du procédé illustrée à la figure 5, on fait varier le taux d'intégration en fonction de la pente de la partie positive de la courbe P (V) de puissance, le taux d'intégration étant d'autant plus élevé que la pente de la courbe se rapproche de zéro.

Suivant une particularité de ce procédé, on limite volontairement le taux d'intégration à des valeurs numériques prédéterminées afin de laisser apparaître sur la courbe de puissance les défauts du moteur, par exemple des défauts d'allumage et/ou de carburation.

On donnera à titre d'exemple numérique non limitatif, les valeurs possibles suivantes :

Si la valeur de la dérivée K ($\Delta V/\Delta P$) est inférieure à 2, le taux d'intégration reste égal à 1 ;

Si $2 \leqslant K \dfrac{\Delta V}{\Delta P} < 3$, le taux d'intégration est égal à 2 ;

Si $3 \leqslant K \dfrac{\Delta V}{\Delta P} < 4$, le taux d'intégration est égal à 3 ;

et ainsi de suite jusqu'à $K \dfrac{\Delta V}{\Delta P} \geqslant 14$.

Pour ces valeurs, le taux d'intégration reste égal à 14, ce nombre étant donné à titre indicatif et pouvant être bien sûr un nombre entier quelconque.

On voit que grâce à ce calcul, on intègre d'autant plus la courbe que la pente se rapproche de zéro (figure 5). Sur la partie terminale de la courbe de la figure 5, on voit une petite irrégularité 20 qui reste apparente malgré l'intégration effectuée et correspond par exemple à un défaut d'allumage. Il convient de noter que l'on ne tient pas compte dans ces calculs des valeurs de K ($\Delta V/\Delta P$) qui sont inférieures à zéro, afin d'éviter des aberrations, le taux d'intégration ne pouvant pas décroître.

Suivant une autre mode de réalisation de ce procédé, on intègre également le calcul de la partie négative $P_n$ de la courbe de puissance P, correspondant à la puissance perdue dans la transmission du véhicule, afin d'obtenir une courbe se rapprochant le plus possible de la réalité.

Dans la forme de réalisation du procédé illustrée à la figure 5, on a commencé l'intégration dès le moment où le moteur a commencé à tourner, c'est-à-dire à partir du point zéro de la courbe. Suivant un autre mode de réalisation possible du procédé, on présélectionne la valeur de la vitesse ou du régime moteur à laquelle on commence à calculer la puissance avec un taux d'intégration variable.

7

En deça de cette valeur, on limite l'intégration à une valeur faible, prédéterminée qui peut être égale à 1, comme illustré ci-dessous.

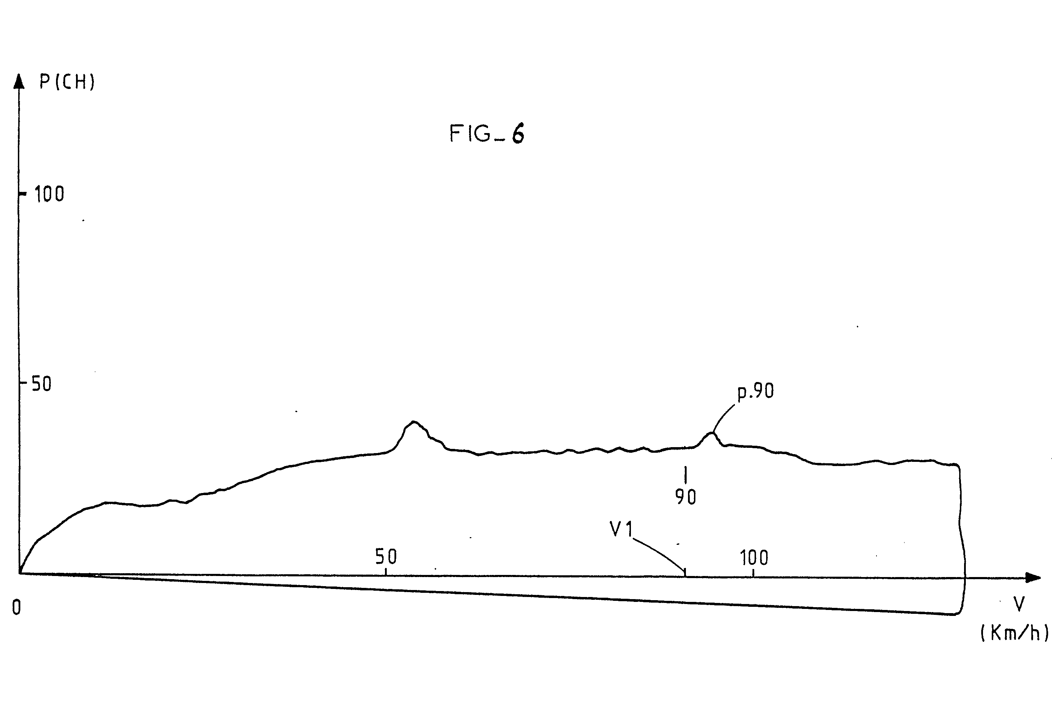

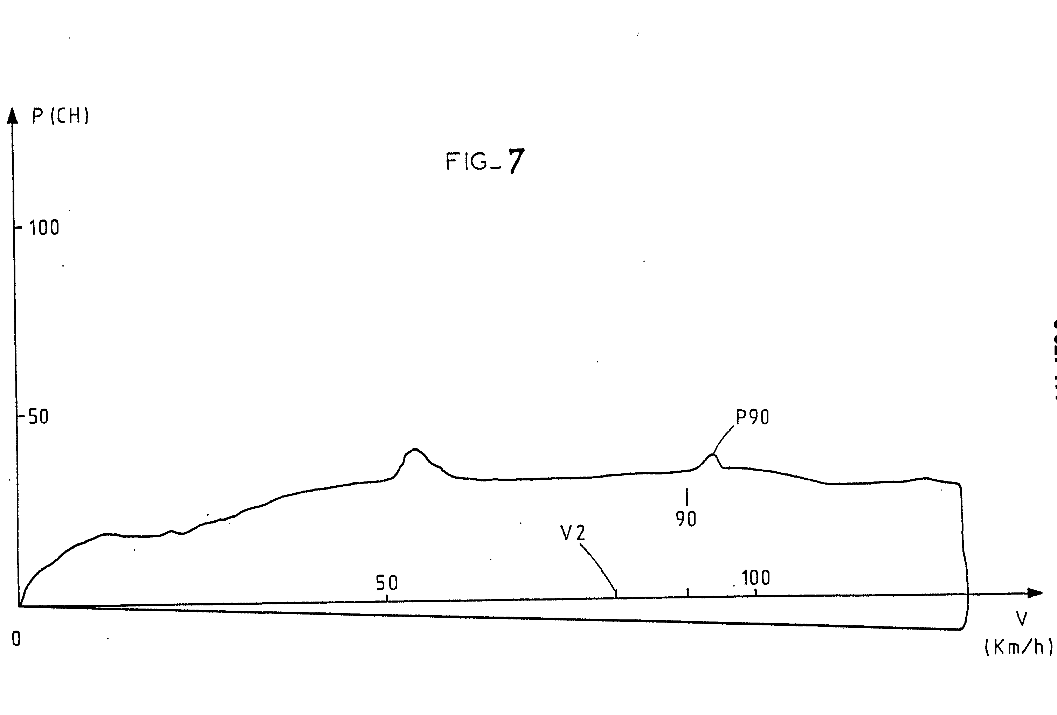

Ainsi, le diagramme de puissance représenté à la figure 6 représente la variation de puissance à la roue d'un véhicule pourvu d'une boîte de vitesses automatique, l'utilisateur ayant présélectionné le passage de seconde en troisième dans cet exemple à 90 km/heure (V1 sur la figure 6). Le calcul de la puissance P est exécuté avec un taux d'intégration variable à partir par exemple d'une valeur donnée de la vitesse, par exemple $V_2$ inférieure à $V_1$ (figure 7). On voit en comparant les parties de la courbe situées de part et d'autre de la vitesse $V_1$ sur les figures 6 et 7, que les irrégularités constatées sur la courbe de la figure 6 de part et d'autre du pic p90 correspondant au changement de vitesse, ont disparu sur la partie correspondante de la figure 7, grâce à l'intégration effectuée.

Ainsi, lorsqu'un véhicule à boîte automatique passe par exemple de seconde en troisième à 90 km/heure, l'utilisateur peut, soit sélectionner cette vitesse sur une roue codée reliée au microprocesseur, qui n'autorise alors le départ de l'intégration progressive qu'à cette vitesse, soit sélectionner une vitesse inférieure à celle du changement de vitesse, par exemple 80 km/heure dans l'exemple illustré à la figure 7 ($V_2$).

Cela permet à l'utilisateur d'étudier de façon plus précise le passage de vitesse choisie, puisque l'on est alors à ce moment avec le taux d'intégration minimum (figure 6).

On notera qu'il peut être intéressant, dans l'exemple du passage de seconde en troisième à 90 km/heure, de sélectionner par l'intermédiaire de la roue codée une vitesse légèrement inférieure à 90 km/heure dans l'exemple représenté à la figure 7. En effet, du fait du taux d'intégration progressive, les phénomènes parasitaires visibles à la figure 6 sont amortis et l'on peut toujours observer de façon efficace le passage de vitesse, le pic p90 restant en effet clairement visible à la figure 7, bien que légèrement amorti.

Il peut donc être intéressant de présélectionner une vitesse légèrement inférieure à la vitesse où se produit le défaut ou le phénomène à étudier, par exemple passage de vitesse, changement brusque de régime moteur, défaut de carburation, défaut d'allumage, etc...

Le procédé selon l'invention n'est pas limité aux trois modes de réalisation décrits ci-dessus et peut comporter de nombreuses variantes d'exécution.

Tout particulièrement on notera le fait que, grâce au mode de traitement logique prévu conformément à l'invention, il est possible de présélectionner une série de vitesses ou de nombres de tours/minute auxquels on veut exécuter les mesures de puissances, par exemple tous les 10 km/heure de 80 à 150 km/heure. L'imprimante 14 inscrit alors au fur et à mesure que ces valeurs mémorisées dans le microcalculateur sont atteintes, les valeurs de la puissance aux roues, de la puissance totale, de la puissance perdue dans la transmission, et le pourcentage de pertes pour toutes les vitesses présélectionnées. Cela n'est pas possible en traitement analogique, dans le cadre du procédé connu mentionné ci-dessus, dans lequel on ne peut sélectionner qu'une seule valeur de la vitesse.

Le paramètre choisi pour effectuer l'intégration du calcul de la puissance avec un taux variable, peut être différent de la pente de la courbe de puissance : ce peut être par exemple le temps, la vitesse, les variations de vitesse, la puissance, le régime moteur, les variations de régime moteur, etc... Il convient de noter que la limitation volontaire du taux d'intégration à des valeurs numériques prédéterminées permet de laisser apparaître sur la courbe de puissance les défauts du moteur.

Enfin, si l'on a décrit ci-dessus des modes de réalisation du procédé dans lesquels le taux d'intégration est variable, ce taux peut aussi bien être fixe sur toute la courbe de puissance, ou sur toute la partie de cette courbe où on exécute l'intégration du calcul de la puissance.

**Revendications**

1. Procédé pour mesurer dynamiquement la puissance totale d'un moteur de véhicule automobile sur un banc d'essai à rouleaux apte à recevoir les roues motrices d'un véhicule, en faisant l'addition, en valeur absolue, de la puissance P1 fournie aux roues et de la puissance P2 perdue dans la transmission, selon lequel on choisit une vitesse linéaire V d'un des rouleaux ou un nombre de tours/minute du moteur jusqu'à laquelle ou jusqu'auquel on veut exécuter la mesure, on porte au cours d'une première phase d'accélération à moteur embrayé, la vitesse linéaire V ou le nombre de tours/minute de la valeur nulle jusqu'à la valeur choisie, on mesure périodiquement, jusqu'à cette vitesse V ou ce nombre de tours, la puissance P1 fournie aux roues, on accélère légèrement le moteur au-dessus de cette vitesse ou de ce nombre de tours puis on débraye le moteur et on le place au point mort, on laisse les rouleaux ralentir leur vitesse de rotation jusqu'à l'arrêt en entraînant par leur inertie la transmission du moteur, et on mesure périodiquement, lors de cette seconde phase de décélération, la puissance P2 perdue dans la transmission, ladite mesure de la puissance respectivement P1 ou P2 étant effectuée à des instants choisis périodiquement en utilisant un capteur de vitesse, c'est-à-dire un générateur calé sur ledit rouleau et délivrant des signaux électriques dont la période T est inversement proportionnelle à la vitesse de rotation dudit rouleau, caractérisé en ce qu'on réalise ladite mesure de la puissance P1 ou respectivement P2 en mesurant à chacun desdits instants deux périodes successives T1 et T2 des signaux électriques émis par ce générateur (3, 4) et ce au moyen d'une horloge interne pilotée par un quartz à

**0 027 411**

haute fréquence, puis on calcule ladite puissance P1 ou respectivement P2 à partir de la différence des deux périodes successives mesurées T1 et T2 et du moment d'inertie J des rouleaux, selon la formule :

$$P1 \text{ ou } P2 = \frac{K_1 \cdot J \cdot (T1 - T2)}{T^*4}$$

dans laquelle P1, P2 est en KW, J en $kg \cdot m^2$, $T^*$, T1 et T2 en $10^{-7}$ s et $K_1 = 4 \cdot 10^{18} \cdot \pi^2$, la valeur de la période $T^*$ étant voisine de celle de T1 ou de T2
et on calcule également la vitesse linéaire V dudit rouleau (1, 2) à partir de la période $T^*$ et du rayon R dudit rouleau, selon la formule :

$$V = \frac{K_2 \cdot R}{T^*}$$

avec V en Km/h, R en m et

$$K_2 = 72 \cdot 10^6 \cdot \pi.$$

2. Procédé selon la revendication 1, caractérisé en ce qu'on inscrit sur une imprimante (14), pour chaque vitesse linéaire V dudit rouleau ou nombre de tours/minute prédéterminé du moteur, la puissance P1 du moteur aux roues, la puissance P2 perdue dans la transmission, la puissance totale du moteur, le pourcentage de puissance perdue et le nombre de tours/minute du moteur.

3. Procédé selon l'une des revendications 1 et 2, caractérisé en ce que, entre deux signaux consécutifs émis par le générateur (3, 4) on totalise, au moyen d'un compteur d'un interface (7), le nombre d'impulsions provenant de l'horloge interne, et à chacun des signaux émis par le générateur, on effectue successivement la mémorisation du nombre d'impulsions, la remise à zéro du compteur et l'émission d'un signal de fin de mesure vers un microprocesseur (5) exécutant les calculs de la puissance P1 et P2 et de la vitesse linéaire V.

4. Procédé selon l'une des revendications 2 et 3, caractérisé en ce que l'on présélectionne une série de vitesses linéaires V du rouleau ou de nombres de tours/minute du moteur auxquelles ou auxquels on veut exécuter les mesures de puissance, par exemple tous les 10 kilomètres/heure de 80 à 150 kilomètres/heure, et on inscrit sur l'imprimante (14) les valeurs de la puissance P1 aux roues ainsi que la puissance P2 perdue dans la transmission et le pourcentage de puissance perdue pour toutes les vitesses présélectionnées.

5. Procédé selon la revendication 1, caractérisé en ce qu'on exécute le calcul de la puissance P1 en effectuant itérativement plusieurs calculs primaires de la puissance P1 pour établir une valeur moyenne, le nombre de ces calculs primaires ou « taux d'intégration » étant soit fixe, soit variable, d'après la forme de la courbe de variation de la puissance en fonction de la vitesse.

6. Procédé selon la revendication 5, caractérisé en ce que le taux d'intégration varie en fonction de la pente de la courbe de puissance P1, ou d'un autre paramètre tel que le temps, la vitesse linéaire V dudit rouleau, la variation de la vitesse V, la puissance P1, le nombre de tours/minute du moteur ou la variation du nombre de tours/minute du moteur, le taux d'intégration étant d'autant plus élevé que la pente de la courbe de puissance P1 se rapproche de zéro.

7. Procédé selon la revendication 5 ou 6, caractérisé en ce que l'on fait varier le taux d'intégration sans tenir compte des zones de la courbe de la puissance P1 dans lesquelles la pente est négative.

8. Procédé selon l'une des revendications 5 à 7, caractérisé en ce qu'on limite le taux d'intégration à des valeurs numériques prédéterminées, afin de laisser apparaître sur la courbe de la puissance P1 les défauts du moteur, par exemple des défauts d'allumage et/ou de carburation.

9. Procédé selon l'une des revendications 6 et 8, caractérisé en ce qu'on intègre également le calcul de la courbe de la puissance P2.

10. Procédé selon l'une des revendications 5 à 9, caractérisé en ce que l'on présélectionne la valeur de la vitesse linéaire V du rouleau ou du nombre de tours/minute du moteur à laquelle ou auquel on commence à calculer la puissance P1 ou P2 avec un taux d'intégration variable.

11. Procédé selon l'une des revendications 5 à 9, caractérisé en ce qu'on présélectionne la valeur de la vitesse linéaire V du rouleau ou du nombre de tours/minute du moteur, au-dessous de laquelle ou duquel on limite le taux d'intégration à une valeur faible prédéterminée, et au-dessus de laquelle ou duquel on commence à calculer la puissance avec un taux d'intégration variable.

12. Procédé selon les revendications 10 et 11, appliqué à une boîte de vitesses automatique, caractérisé en ce que l'on présélectionne la vitesse linéaire V de passage d'une vitesse à l'autre, par exemple la vitesse V de passage de la première à la deuxième, ou de la seconde à la troisième, etc.

13. Procédé selon la revendication 12, caractérisé en ce qu'on fait commencer la variation du taux d'intégration à ce passage d'une vitesse à l'autre.

14. Banc de mesure pour mesurer dynamiquement la puissance totale d'un véhicule automobile, destiné à la mise en œuvre du procédé selon la revendication 1, et comprenant des rouleaux aptes à recevoir les roues motrices d'un véhicule, un capteur de la vitesse de rotation d'un de ces rouleaux et un dispositif de mesure apte à déterminer la valeur de la puissance totale à partir des signaux électriques émis par le capteur de vitesse (3, 4) et comportant des moyens pour additionner, en valeur absolue, la

9

puissance P1 fournie aux roues et la puissance P2 perdue dans la transmission, caractérisé en ce que ledit capteur émet un desdits signaux de période T à chaque tour complet dudit rouleau, et en ce que le dispositif de mesure comprend :

— un système de mesure, opérant à des instants choisis périodiquement, de deux périodes consécutives T1 et T2 des signaux électriques émis par ce capteur (3, 4) de vitesse au moyen d'une horloge interne pilotée par un quartz à haute fréquence et d'une interface (7) de traitement logique ;

— un système de détermination d chacun desdits instants en cas de moteur embrayé en phase d'accélération et en cas de moteur débrayé en phase de décélération respectivement de la puissance P1 aux roues, et de la puissance P2 perdue dans la transmission par application de la formule :

$$P1 \text{ ou } P2 = \frac{K_1 \cdot J \cdot (T1 - T2)}{T{*}4}$$

dans laquelle P est en KW, J en kg · m², T*, T1 et T2 en $10^{-7}$ s et $K_1 = 4 \cdot 10^{18} \cdot \pi^2$, la valeur de la période T* étant voisine de celle de T1 ou T2 et un système de détermination de la vitesse linéaire dudit rouleau (1, 2) par application de la formule :

$$V = \frac{K_2 \cdot R}{T{*}}$$

avec V en Km/h, R en m étant le rayon du rouleau, et

$$K_2 = 72 \cdot 10^6 \cdot \pi$$

le système de détermination comportant un microprocesseur (5) interposé entre le capteur de vitesse (3, 4) et des moyens de conversion (8, 9) et d'enregistrement de la puissance P1 aux roues et de la vitesse linéaire V dudit rouleau pendant la phase d'accélération, et de la puissance P2 perdue dans la transmission en fonction de ladite vitesse V pendant la phase de décélération, les puissances P1 et P2 et la vitesse V étant enregistrées respectivement en ordonnées et en abscisses sur une table traçante (11), l'interface (7) de traitement logique étant interposé entre le capteur de vitesse (3, 4) et le microprocesseur (5).

15. Banc de mesure selon la revendication 14, caractérisé en ce qu'il comprend une imprimante (14) reliée au microprocesseur (5) et apte à afficher : la vitesse linéaire V présélectionnée avant le lancement du moteur à laquelle on veut mesurer la puissance aux roues et la puissance perdue, la puisance aux roues, la puissance perdue, le pourcentage de pertes à cette vitesse linéaire V et le nombre de tours/minute du moteur.

16. Banc de mesure selon l'une des revendications 14 et 15, caractérisé en ce qu'il est muni d'une pince inductive (16) branchée d'une part sur le moteur et d'autre part reliée à un interface lui-même connecté au microprocesseur (5), et capable de contrôler le nombre de tours/minute du moteur.


**Claims**

1. Method for dynamically measuring the total power of an automotive vehicle engine on a roller-type test bench which is capable of receiving the drive wheels of a vehicle, by adding at absolute value the power P1 delivered to the wheels and the power P2 lost in transmission, wherein there is selected a linear valocity V of one of the rollers or a number of revolutions per minute of the engine up to which it is desired to perform the measurement, the linear velocity V or the number of revolutions per minute is increased from the zero value to the selected value during a first acceleration phase with the drive engaged, the power P1 delivered to the wheels is measured periodically up to this velocity V or this number of revolutions, the engine is slightly accelerated beyond this velocity or this number of revolutions, the drive is then disengaged and put in neutral, the rotation of the rollers is allowed to slow down until they come to a standstill while driving the engine transmission by inertia and the power P2 lost in transmission is measured periodically during this second deceleration phase, said measurement of the power P1 or P2 respectively béing performed at periodically selected instants by utilizing a speed pickup, that is to say a generator which is keyed on said roller and delivers electric signals having a period T which is inversely proportional to the rotational velocity of said roller, characterized in that said measurement of the power P1 or respectively P2 is performed by measuring at each instant aforesaid two successive periods T1 and T2 of the electric signals emitted by this generator (3, 4), this being achieved by means of an internal clock monitored by a high-frequency quartz crystal unit, whereupon said power P1 or respectively P2 is calculated from the difference between the two successive measured periods T1 and T2 and from the moment of inertia J of the rollers in accordance with the formula :

$$P1 \text{ or } P2 = \frac{K_1 \cdot J \cdot (T1 - T2)}{T{*}4}$$

where P1, P2 is in kW, J is in kg · m², T*, T1 and T2 are in $10^{-7}$ s and $K_1 = 4 \cdot 10^{18} \cdot \pi^2$, the value of the period T* being close to that of $T_1$ or of $T_2$

10

# 0 027 411

and the linear velocity V of said roller (1, 2) is also calculated from the period T* and from the radius R of said roller in accordance with the formula :

$$V = \frac{K_2 \cdot R}{T^*}$$

with V in Km/h, R in m and

$$K_2 = 72 \cdot 10^6 \cdot \pi.$$

2. Method according to claim 1, characterized in that there are recorded on a printer (14), in respect of each linear velocity V of said roller or predetermined number of revolutions per minute of the engine, the engine power P1 at the wheels, the power P2 lost in transmission, the total power of the engine, the percentage of power lost and the number of revolutions per minute of the engine.

3. Method in accordance with one of claims 1 and 2, characterized in that, between two consecutive signals emitted by the generator (3, 4), the number of pulses delivered by the internal clock is summated by means of a counter of an interface (7) and, at each of the signals emitted by the generator, there are performed successively the storage of the number of pulses in memory, resetting of the counter to zero and emission of an end-of-measurement signal to a microprocessor (5) which performs the calculations of the power P1 and P2 and of the linear velocity V.

4. Method in accordance with one of claims 2 and 3, characterized in that a series of linear velocities V of the roller or of numbers of revolutions per minute of the engine at which it is desired to perform the power measurements are preselected, for example at intervals of 10 kilometers per hour from 80 to 150 kilometers per hour and there are recorded on the printer (14) the values of the power P1 at the wheels are well as the power P2 lost in transmission and the percentage of power lost in respect of all the preselected speeds.

5. Method in accordance with claim 1, characterized in that calculation of the power P1 is carried out by performing iteratively a number of primary calculations of the power P1 in order to establish a mean value, the number of these primary calculations or « integration rates » being either fixed or variable according to the shape of the curve of variation of power as a function of velocity.

6. Method in accordance with claim 5, characterized in that the integration rate varies as a function of the slope of the curve of power P1 or of another parameter such as time, the linear velocity V of said roller, the variation in velocity V, the power P1, the number of revolutions per minute of the engine or the variation in number of revolutions per minute of the engine, the integration rate being higher as the slope of the curve of power P1 comes closer to zero.

7. Method in accordance with claim 5 or 6, characterized in that the integration rate is caused to vary without taking into account the zones of the curve of the power P1 in which the slope is negative.

8. Method in accordance with one of claims 5 to 7, characterized in that the integration rate is limited to predetermined numerical values in order to allow engine defects such as for example defects in ignition and/or carburation to appear on the curve of the power P1.

9. Method in accordance with one of claims 6 and 8, characterized in that the calculation of the curve of the power P2 is also integrated.

10. Method in accordance with one of claims 5 to 9, characterized in that there is preselected the value of the linear velocity V of the roller or of the number of revolutions per minute of the engine at which calculation of the power P1 or P2 with a variable integration rate is begun.

11. Method in accordance with one of claims 5 to 9, characterized in that there is preselected the value of the linear velocity V of the roller or of the number of revolutions per minute of the engine below which the integration rate is limited to a low predetermined value and above which a calculation of the power with a variable integration rate is begun.

12. Method in accordance with claims 10 and 11 applied to an automatic transmission, characterized in that the linear velocity V of changeover from one gear to the next is preselected, for example the velocity V of changeover from bottom gear to second gear or from second gear to third gear, etc.

13. Method in accordance with claim 12, characterized in that the variation in integration rate is begun at the instant of changeover from one gear to the next.

14. Measuring bench for dynamically measuring the total power of an automotive vehicle as intended for the pratical application of the method in accordance with claim 1 and comprising rollers adapted to receive the drive wheels of a vehicle, a speed pickup for sensing the rotational velocity of one of these rollers and a measuring device which is capable of determining the value of the total power from the electric signals emitted by the speed pickup (3, 4) and comprises means for adding at absolute value the power P1 delivered to the wheels and the power P2 lost in transmission, characterized in that said pickup emits one of said signals having a period T at each complete revolution of said roller, and that the measuring device comprises :

— a system which operates at periodically chosen instants for measuring two consecutive periods T1 and T2 of the electric signals emitted by this speed pickup (3, 4) by means of an internal clock controlled by a high-frequency quartz crystal unit and by means of a logic processing interface (7) ;

— a system for determination, at each of said instants in the event of engaged drive in the

11

acceleration phase and in the event of disengaged drive in the deceleration phase, respectively of the power P1 at the wheels and of the power P2 lost in transmission by application of the formula :

$$P1 \text{ or } P2 = \frac{K_1 \cdot J \cdot (T1 - T2)}{T*4}$$

where P is in kW, J is in $kg \cdot m^2$, $T*$, T1 and T2 are in $10^{-7}$ s and $K_1 = 4 \cdot 10^{18} \cdot \pi^2$, the value of the period $T*$ being close to that of T1 or T2 and a system for determination of the linear velocity of said roller (1, 2) by application of the formula :

$$V = \frac{K_2 \cdot R}{T*}$$

with V in Km/h, R in m being the radius of the roller, and
$$K_2 = 72 \cdot 10^6 \cdot \pi.$$

the determination system being constituted by a microprocessor (5) interposed between the speed pickup (3, 4) and means (8, 9) for converting and recording the power P1 at the wheels and the linear velocity V of said roller during the acceleration phase and the power P2 lost in transmission as a function of said velocity V during the deceleration phase, the powers P1 and P2 and the velocity V being recorded respectively in ordinates and in abscissae on a tracing board (11), the logic processing interface (7) being interposed between the speed pickup (3, 4) and the microprocessor (5).

15. Measuring bench in accordance with claim 14, characterized in that it comprises a printer (14) connected to the microprocessor (5) and adapted to display : the linear velocity V preselected before starting the engine and whereat it is desired to measure the power at the wheels and the lost power, the power at the wheels, the lost power, the percentage of losses at this linear velocity V and the number of revolutions per minute of the engine.

16. Measuring bench in accordance with one of claims 14 and 15, characterized in that it is fitted with an inductive clip (16) connected on the one hand to the engine and on the other hand to an interface connected in turn to the microprocessor (5) and capable of controlling the number of revolutions per minute of the engine.

## Ansprüche

1. Verfahren zur dynamischen Gesamtleistungsmessung eines Kraftfahrzeugmotors auf einem Rollenprüfstand, welcher die Antriebsräder eines Fahrzeugs aufnimmt, bei dem in absoluten Werten die an die Räder gelieferte Leistung P1 und die Verlustleistung P2 der übertragung aufgerechnet werden, in dem eine lineare Geschwindigkeit V einer der Rollen oder eine Drehzahl pro Minute des Motors gewählt wird, bei der die Messung durchgeführt werden soll, wobei im Verlauf einer ersten Beschleunigungsphase des eingekuppelten Motors die lineare Geschwindigkeit V oder die Drehzahl pro Minute vom Nullwert bis zum gewählten Wert hochgefahren wird und dabei bis diese Geschwindigkeit V oder diese Drehzahl erreicht ist, die an die Räder gelieferte Leistung P1 gemessen wird und der Motor dann geringfügig über diese Geschwindigkeit oder diese Drehzahl hinaus beschleunigt und dann abgekuppelt und in den Leerlauf gebracht wird und sich die Drehzahl der Rollen, die sich durch die Trägheit der Kraftübertragung zum Motor ergibt bis zum Stillstand verlangsamt, wobei in einer zweiten Verzögerungsphase die Verlustleistung P2 der Kraftübertragung periodisch gemessen wird und die Messung der Leistung P1 bzw. P1 in periodisch gewählten Zeitpunkten mittels eines Geschwindigkeitsmessers, d. h. eines Tachogenerators an der besagten Rolle erfolgt, welcher elektrische Signale abgibt, deren Zeitabstand T voneinander umgekehrt proportional zur Drehzahl der besagten Rolle ist, dadurch gekennzeichnet, daß die besagte Messung der Leistung P1 bzw. P2 erfolgt, in dem die von dem Generator (3, 4) abgegebenen elektrischen Signale in zwei aufeinander folgenden Zeiträumen T1 und T2 gemessen werden und zwar mittels einer internen, von einem Hochfrequenzquarz gesteuerten Uhr, woraufhin die Leistung P1 bzw. P2 aus der Differenz der beiden aufeinander folgenden Meßperioden T1 und T2 und dem Trägheitsmoment J der Rollen gemäß folgender Formel berechnet wird :

$$P1 \text{ oder } P2 = \frac{K_1 \cdot J \cdot (T1 - T2)}{T*4}$$

wobei P1, P2 in kW, J in $kg\ m^2$, $T*$, T1 und T2 in $10^{-7}$ s gemessen wird und $K1 = 4 \times 10^{18} \times pi^2$ ist und der Wert der Periode $T*$ dem von T1 oder T2 benachbart ist und zugleich die lineare Geschwindigkeit V der Rolle (1, 2) mit Hilfe der Periode $T*$ und des Radius R der Rolle gemäß folgender Formel berechnet wird :

$$V = \frac{K_2 \cdot R}{T*}$$

mit V in km/h und R in m und $K2 = pi \times 72 \times 10^6$.

2. Verfahren gemäß Anspruch 1, dadurch gekennzeichnet, daß auf einem Ausdruck (14) für jede durch den Motor bestimmte lineare Geschwindigkeit V oder Rollendrehzahl pro Minute die Leistung P1 des Motors an den Rädern, die Verlustleistung, P2 der Kraftübertragung, die Gesamtleistung des Motors, der Prozentsatz der Verlustleistung und die Drehzahl pro Minute des Motors aufgeschrieben wird.

3. Verfahren gemäß einem der Ansprüche 1 und 2, dadurch gekennzeichnet, daß zwischen zwei aufeinander folgenden vom Generator (3, 4) abgegebenen Signalen mittels eines zwischengeschalteten Zählers (7) die von der internen Uhr abgegebenen Impulse aufaddiert und bei jedem vom Generator abgegebenen Impuls die Anzahl der Impulse nacheinander abgespeichert und der Zähler auf Null gestellt wird und beim Auftreten eines Signales für das Ende der Messung die Berechnung der Leistung P1 und P2 und der linearen Geschwindigkeit V durch einen Mikroprozessor (5) durchgeführt wird.

4. Verfahren gemäß einem der Ansprüche 2 und 3, dadurch gekennzeichnet, daß eine Reihe von linearen Geschwindigkeiten V der Rollen oder von Drehzahlen pro Minute des Motors vorgewählt werden, bei denen Leistungsmessungen durchgeführt werden sollen, beispielsweise alle 10 km/h von 80 bis 150 km/h und auf einen Ausdruck (14) die Werte der Leistung P1 an den Rädern sowie der Verlustleistung P2 der Kraftübertragung und der Prozentsatz der Verlustleistung für alle vorgewählten Geschwindigkeiten geschrieben werden.

5. Verfahren gemäß Anspruch 1, dadurch gekennzeichnet, daß zur Berechnung der Leistung P1 mehrere Primärberechnungen der Leistung P1 iterativ durchgeführt werden, um einen Mittelwert zu erhalten, wobei die Anzahl der Primärberechnungen oder der « Integrationsfaktor » fest oder variabel sein kann, in Abhängigkeit von der Form der Kurve der Leistung in Funktion von der Geschwindigkeit.

6. Verfahren gemäß Anspruch 5, dadurch gekennzeichnet, daß der Integrationsfaktor variiert in Funktion von der Steigung der Kurve der Leistung P1 oder von einem anderen Parameter wie der Zeit, der linearen Geschwindigkeit V der Rollen, der Änderung der Geschwindigkeit V, der Leistung P1, der Drehzahl pro Minute des Motors oder der Änderung der Drehzahl pro Minute des Motors, wobei der Integrationsfaktor mindestens ebenso groß gewählt ist, wie die Steigung der Kurve der Leistung P1, die sich Null nähert.

7. Verfahren gemäß Anspruch 5 oder 6, dadurch gekennzeichnet, daß der Integrationsfaktor variiert wird, ohne daß dabei Zonen der Kurve der Leistung P1 berücksichtigt werden, in denen die Steigung negativ ist.

8. Verfahren gemäß einem der Ansprüche. 5 bis 7, dadurch gekennzeichnet, daß der Integrationsfaktor auf vorher bestimmte Zahlenwerte beschränkt ist, um in der Kurve der Leistung P1 Störungen des Motors, beispielsweise Zünd- und/oder Vergaserstörungen erscheinen zu lassen.

9. Verfahren gemäß einem der Ansprüche 6 und 8, dadurch gekennzeichnet, daß bei der Berechnung der Kurve der Leistung P2 ebenfalls integriert wird.

10. Verfahren gemäß einem der Ansprüche 5 bis 9, dadurch gekennzeichnet, daß der Wert der linearen Geschwindigkeit V der Rolle oder der Drehzahl pro Minute des Motors so vorgewählt wird, daß die Berechnung der Leistung P1 oder P2 mit einem variabelen Integrationsfaktor beginnt.

11. Verfahren gemäß einem der Ansprüche 5 bis 9, dadurch gekennzeichnet, daß der Wert der linearen Geschwindigkeit V der Rolle oder der Drehzahl pro Minute des Motors so vorgewählt wird, daß er unter dem liegt, der den Integrationsfaktor auf einen schwach vorherbestimmten Wert beschränkt und über dem liegt, bei welchem die Berechnung der Leistung mit einem variablen Faktor beginnt.

12. Verfahren gemäß den Ansprüchen 10 und 11, bei einer automatischen Geschwindigkeitseinstellung, dadurch gekennzeichnet, daß die lineare Geschwindigkeit V beim übergang von einer Geschwindigkeit zur nächsten vorgewählt ist, beispielsweise auf die Geschwindigkeit V beim übergang von der ersten auf die zweite oder von der zweiten auf die dritte usw.

13. Verfahren gemäß Anspruch 12, dadurch gekennzeichnet, daß die Variation des Integrationsfaktors beim übergang von einer Geschwindigkeit auf die nächste beginnt.

14. Rollenprüfstand zur dynamischen Gesamtleistungsmessung eines Kraftfahrzeuges zur Durchführung des Verfahrens gemäß Anspruch 1, welcher die Antriebsräder eines Fahrzeuges aufnimmt und an einer der Rollen einen Drehzahlmesser sowie Einrichtungen zum Bestimmen der Gesamtleistung aufweist, die die elektrischen Signale vom Drehzahlmesser (3, 4) aufnimmt und Mittel zum Aufaddieren der absoluten Werte der Leistung P1 an den Rädern und der Verlustleistung P2 der Kraftübertragung enthält, dadurch gekennzeichnet, daß der besagte Drehzahlmesser bei jeder vollständigen Umdrehung der Rolle Signale der Periode T abgibt und dadurch daß die Meßvorrichtung folgendes enthält :

— ein Meßsystem, welches in zwei periodisch gewählten Zeitpunkten arbeitet, wobei zwei aufeinander folgende Perioden T1 und T2 der vom Drehzahlmesser (3, 4) abgegebenen Signale auftreten, die mittels einer internen von einem Hochfrequenzquarz gesteuerten Uhr und einer Interfacelogik (7) erzeugt werden ;

— ein System zur Bestimmung jedes der besagten Zeitpunkte bei eingekuppeltem Motor in der Beschleunigungsphase und bei abgekuppeltem Motor in der Verzögerungsphase, wobei die Leistung P1 an den Rädern bzw. die Verlustleistung P2 der Kraftübertragung sich nach folgender Formel berechnet :

$$P1 \text{ oder } P2 = \frac{K_1 \cdot J \cdot (T1 - T2)}{T^*4}$$

wobei P in kW, J in kg $\times$ m$^2$, T$^*$, T1 und T2 in $10^{-7}$ s gemessen wird und K1 $= 4 \times 10^{18} \times$ pi$^2$ ist und der Wert der Periode T$^*$ dem von T1 oder T2 benachbart ist und ein System zur Bestimmung der linearen Geschwindigkeit der Rolle (1, 2) gemäß folgender Formel vorhanden ist :

13

**0 027 411**

$$V = \frac{K_2 \cdot R}{T^*}$$

mit V in km/h, R der Rollendurchmesser in m und K2 = pi $\times$ 72 $\times$ 10$^6$, wobei das System zur Bestimmung einen Mikroprozessor enthält, welcher zwischen den Drehzahlmesser (3, 4) und Umwandlungseinrichtungen (8, 9) geschaltet ist und mit Aufzeichnungseinrichtungen für die Leistung P1 an den Rädern und für die lineare Geschwindigkeit V der Rolle während der Beschleunigungsphase und für die Verlustleistung P2 der Kraftübertragung in Funktion von der Geschwindigkeit V während der Verzögerungsphase, wobei die Leistungen P1 und P2 und die Geschwindigkeit V in Ordinaten- und Abszissenwerten auf einer Zeichenfläche (11) aufgetragen sind, wobei zwischen dem Drehzahlmesser (3, 4) und dem Mikroprozessor (5) eine Interfacelogik (7) eingeschaltet ist.

15. Rollenprüfstand gemäß Anspruch 14, dadurch gekennzeichnet, daß er einen an den Mikroprozessor angeschlossenen Schreiber (14) aufweist, welcher in der Lage ist, die lineare Geschwindigkeit V, die vor dem Einschalten des Motors vorgewählt wird und die der entspricht, bei der die Leistung an den Rädern und die Verlustleistung gemessen wird, die Leistung an den Rädern, die Verlustleistung, den Prozentsatz der Verlustleistung bei dieser linearen Geschwindigkeit V und die Drehzahl pro Minute des Motors aufzuzeichnen.

16. Rollenprüfstand gemäß einem der Ansprüche 14 und 15, dadurch gekennzeichnet, daß er mit einer induktiven Meßeinrichtung versehen ist, die einerseits mit dem Motor und andererseits an ein mit dem Mikroprozessor angeschlossenes Interface verbunden ist, die die Drehzahl pro Minute des Motors steuert.

FIG_1

FIG_2

FIG_3

| VITESSE | 0130 KM/H |
| REGIME MOTEUR | 5540 T/MI |
| PUISSANCE MOTEUR | 0088 CH |
| PUISSANCE A LA ROUE | 0067 CH |
| PUISSANCE ABSORBEE | 0023 % |

FIG_4

FIG_5

0 027 411

FIG_6

0 027 411

FIG_**7**

0 027 411